# EUROPÄISCHE PATENTSCHRIFT

(11) **EP 1 953 404 B1**
(45) Veröffentlichungstag und Bekanntmachung des Hinweises auf die Patenterteilung: **02.07.2014**
(21) Anmeldenummer: 07101702.4
(22) Anmeldetag: 05.02.2007
(51) Int. Cl.: F16D 3/12, F16D 3/66, F16F 15/121

(54) **Kupplungsvorrichtung mit Schenkelfeder**
Coupling device with a leg spring
Dispositif d'embrayage doté d'un ressort spiralé

(43) Veröffentlichungstag der Anmeldung: 06.08.2008
(73) Patentinhaber: Getrag Ford Transmissions GmbH, 50735 Köln (DE); Ford-Werke GmbH, 50735 Köln (DE)
(72) Erfinder: Hegerath, Andreas, 50126, Bergheim (DE); Hinsberger, Uwe, 50823, Köln (DE); Fuss, Josef, 50189, Elsdorf (DE); Kirchhoffer, Johann, 50737, Köln (DE); Wirtz, Hans-Peter, 50769 Köln (DE)

(56) Entgegenhaltungen:
- EP-A- 0 607 718
- DE-A1- 2 247 460
- DE-B4- 3 546 961
- GB-A- 548 189

## Beschreibung

Die Erfindung betrifft einen Antriebsstrang mit einer zwischen einem Motor und einem Getriebe eingesetzten Kupplungsvorrichtung mit einem ersten Kupplungsteil und mit einem zweiten Kupplungsteil, der zum ersten Kupplungsteil koaxial angeordnet ist, wobei zur formschlüssigen Übertragung eines Drehmomentes zwischen den Kupplungsteilen das erste Kupplungsteil wenigstens ein erstes Eingriffsglied und das zweite Kupplungsteil wenigstens ein zweites Eingriffsglied aufweisen, und wobei die Kupplungsvorrichtung eine Federeinrichtung umfasst, durch die das erste Eingriffsglied und das zweite Eingriffsglied in Umfangsrichtung verspannt sind.

Eine derartige Kupplungsvorrichtung wird beispielsweise in einem Kraftfahrzeug einsetzen, um einen Verbrennungsmotor mit einem Getriebe des Kraftfahrzeugs zu verbinden. Üblicherweise weisen die Kupplungsteile eine Vielzahl von Eingriffsgliedern wie beispielsweise in Form von Kauen bei einer Klauenkupplung oder in Form von Zähnen bei einer Keilwellenverbindung auf. Durch die Federeinrichtung, die die Kupplungsteile in Umfangsrichtung verspannt, sollen unerwünschte Geräusche vermieden werden, die bei Schwingungsanregungen durch den Verbrennungsmotor in der Kupplungsvorrichtung entstehen können (zum Beispiel das Klackern der Zähne durch Hin- und Herbewegung innerhalb des Zahnspiels).

Beispielsweise ist aus der DE 19623287 A1 eine Kupplung offenbart, bei der das erste Eingriffsglied in Form eines Zackens einen Einschnitt aufweist, der diesen Zacken in einem Zackenteil, der einen starren Körper bildet, und mindestens einen Zackenteil trennt, der vorbestimmte elastisch Eigenschaften hat. Diese Zacke greift in eine komplementär ausgebildete Vertiefung, die das zweite Eingriffsglied des zweiten Kupplungsteils bildet, wobei durch das elastische Zackenteil Zacke und Vertiefung in Umfangsrichtung verspannt sind. Eine derartige Lösung lässt sich aufgrund begrenzten Bauraums als Verbindung zwischen Motor und Getriebe in einem Kraftfahrzeug, unter Berücksichtigung der zu übertragenden Drehmomente und hinsichtlich einer einfachen Montage nicht einsetzen.

Die DE 35 46 961 B4 beschreibt eine Einrichtung zum Kompensieren von Drehstößen, insbesondere von Drehmomentschwankungen einer Brennkraftmaschine. Dazu ist zwischen einer ersten Schwungmasse, die mit der Brennkraftmaschine verbunden ist, und einer zweiten Schwungmasse, die mit einem Getriebe verbunden ist, wobei die beiden Schwungmassen zueinander koaxial angeordnet und entgegen der Wirkung einer Dämpfungseinrichtung gegeneinander verdrehbar sind, ein Zwischenteil vorgesehen. Das Zwischenteil ist gegenüber den beiden Schwungmassen verdrehbar und mit ihnen jeweils über einen Dämpfer gekoppelt. Darüber hinaus umfasst die Dämpfungseinrichtung in Umfangsrichtung wirkende Kraftspeicher und/oder Reib- oder Gleitmittel, so dass die Einrichtung im Aufbau insgesamt relativ aufwendig gestaltet ist.

Der Erfindung liegt die Aufgabe zugrunde, einen Antriebsstrang mit einer Kupplungsvorrichtung mit Federeinrichtung, die insbesondere in einem Kraftfahrzeug zur Verbindung von Motor und Getriebe einsetzbar ist, bereitzustellen, die in einem beschränkten Bauraum untergebracht werden kann, eine Geräuschentwicklung der Kupplungsvorrichtung durch Schwingungen des Motors möglichst vermeidet, einfach aufgebaut und leicht zu montieren ist.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Gemäß Anspruch 1 zeichnet sich die Kupplungsvorrichtung des erfindungsgemäßen Antriebsstrangs dadurch aus, dass die Federeinrichtung eine Schenkelfeder mit einem Ringteil und zwei Schenkeln aufweist, wobei der Ringteil koaxial zu den Kupplungsteilen angeordnet ist und wobei sich die Schenkel in radialer Richtung nach außen erstrecken. Dabei stützen sich ein Schenkel mittelbar oder unmittelbar an dem ersten Eingriffsglied und der andere Schenkel mittelbar oder unmittelbar an dem zweiten Eingriffsglied ab, so dass durch die Kraft der Schenkelfeder das erste Eingriffsglied in Umfangsrichtung gegen das zweite Eingriffsglied gedrückt wird. Die Schenkelfeder sorgt dafür, dass die Eingriffsglieder im Betrieb der Kupplungsvorrichtung nicht voneinander abheben und wieder aufeinander stoßen, was zu unerwünschten Geräuschen (Klackern) führt und zudem die Kupplungsvorrichtung schädigt.

Das Ringteil der Schenkelfeder kann einen Ring umfassen, der in Umfangsrichtung nicht geschlossen ist und somit zwei offene Enden aufweist. Jeweils ein Ende des Rings ist dabei mit einem der Schenkel verbunden. Ein Winkelbereich, in dem der Ring geschlossen ist, kann größer als 300° sein und beträgt vorzugsweise mehr als 320 °. Die mit den Enden verbundenen Schenkel können im wesentlichen zueinander parallel verlaufen

Der Querschnitt der Schenkelfeder kann rechteckig oder auch eine andere Form (rund, oval, mehreckig, etc.) sein. Vorzugsweise ist die Schenkelfeder einstückig aus Federstahl ausgeführt. Durch eine derartige Schenkelfeder lassen sich Verspannungs-Drehmomente von über 30 Nm und mehr (beispielsweise 50 Nm) realisieren, wobei sich durch die unterzubringende Schenkelfeder der Bauraum der Kupplungsvorrichtung nicht oder nur unwesentlich vergrößert.

In einem bevorzugten Ausführungsbeispiel überträgt im Normalbetrieb das erste Kupplungsteil in Hauptdrehrichtung ein Drehmoment auf das zweite Kupplungsteil, wobei die Federeinrichtung das erste Eingriffsglied in Hauptdrehrichtung gegen das zweite Eingriffsglied drückt, so dass das erste Eingriffsglied mit einer Lastseite an einer Lastseite des zweiten Eingriffsglieds anliegt. Durch diese Anordnung wird bei Drehmomentübertragung von dem ersten Kupplungsteil zum zweiten Kupplungsteil in Hauptdrehrichtung die Schenkelfeder nicht belastet. Kommt es hingegen zu einer Umkehr der Drehmomentübertragung, d.h. zu einer Übertragung vom zweiten Kupplungsteil auf das erste Kupplungsteil, werden im Normalbetrieb an den Lastseiten anliegenden Eingriffglieder auseinander gedrückt werden, wenn das Übertragungs-Drehmoment größer als das durch die Schenkelfeder erzeugte Drehmoment ist. Um ein Abheben der Lastseite des ersten Eingriffsglied von der Lastseite des zweiten Eingriffsglied zu verhindern, ist die Schenkelfeder zweckmäßig so dimensioniert, dass das durch die Schenkelfeder erzeugte Drehmoment größer ist als üblicherweise auftretende Drehmomente bei Drehmomentumkehr.

Alternativ oder zusätzlich können das erste Eingriffsglied und/oder das zweite Eingriffsglied einen Anschlag ausbilden, der den Federweg der Federeinrichtung bei einer Drehmomentübertragung vom zweiten auf das erste Eingriffsglied (Umkehr der Drehmomentübertragung gegenüber Normalbetrieb der Kupplung) begrenzt. Durch diesen Anschlag, der mehrere Anschlagstellen umfassen kann, lassen sich die Federwege und damit die auf die Federeinrichtung wirkenden Kräfte beschränken, sodass sie wirkungsvoll gegen Überlast oder Blockstellung geschützt ist.

In einem bevorzugten Ausführungsbeispiel ist die Schenkelfeder in axialer Richtung zu dem ersten oder dem zweiten Kupplungsteil fixiert und weist an einem freien Ende eines Schenkels eine Fase auf, die ein axiales Aufeinanderschieben der Kupplungsteile bei der Montage der Kupplungsvorrichtung erleichtern soll. Die Schenkelfeder kann dabei vorgespannt sein.

Das erste und das zweite Eingriffsglied können in einer Fett- oder Ölkammer angeordnet sein. Das Fett oder Öl in der Kammer sorgt in erster Linie für reduzierte Axialkräfte und zweitens für eine gewisse Dämpfung von möglichen Schwingungen zwischen dem ersten und dem zweiten Eingriffsglied in Umfangsrichtung. Auch kann das Fett oder das Öl dazu beitragen, einen abrasiven Verschleiß aufgrund der Relativbewegung der Eingriffsglieder untereinander zu vermeiden bzw. zumindest zu reduzieren.

Die Fett- oder Ölkammer kann wenigstens eine Luftaustrittsöffnung aufweisen, durch die bei steigenden Temperaturen in der Fettkammer Luft austreten kann.

Es können mehrere erste Eingriffsglieder und mehrere zweite Eingriffsglieder vorgesehen sein, die vorzugsweise im wesentlichen gleich verteilt auf einem Umfang angeordnet sind. Beispielsweise kann die Kupplungsvorrichtung als Klauenkupplung ausgebildet sein, wobei dann das erste Eingriffsglied und das zweite Eingriffsglied jeweils als Klaue ausgebildet sind. Dabei greift eine Klaue des ersten Kupplungsteil in eine Vertiefung oder Aussparung zwischen zwei benachbarten Klauen des zweiten Kupplungsteils.

Soweit mehrere erste und zweite Eingriffglieder vorgesehen sind, kann in einer Ausführung ein Eingriffsglied aus der Gruppe der ersten Eingriffsglieder und/oder ein Eingriffsglied aus der Gruppe der zweiten Eingriffsglieder aus einem DrehmomentÜbertragungspfad zwischen erstem und zweitem Kupplungsteil herausgenommen sein, an denen unmittelbar die Schenkelfeder anliegt bzw. über die die Schenkelfeder mit den übrigen Eingriffsgliedern zusammenwirkt. Somit übertragen diese unmittelbar an der Schenkelfeder anliegenden Eingriffsglieder nur die Kraft der Schenkelfeder, sie dienen nicht dazu, Drehmoment vom Motor auf das Getriebe zu übertragen. Dies ist besonders von Vorteil, wenn diese Eingriffsglieder durch einen notwendigen Platzbedarf für die Schenkelfeder kleiner ausgeführt sind und somit die "schwächsten" Übertragungsglieder der Kupplungsvorrichtung darstellen würden. Somit können diese Eingriffsglieder nur für die Übertragung der Kraft der Schenkelfeder ausgelegt sein und stehen nicht in Kontakt mit benachbarten Eingriffsgliedern des jeweils anderen Kupplungsteils. Das erforderliche Spiel dafür muss größer sein als das Spiel, das bei dem oben beschrieben Anschlag vorzusehen ist. Die Streubreite der Gesamtübertragungskapazität der Kupplungsvorrichtung wird somit minimiert.

Die Federeinrichtung kann wenigstens ein federndes Zusatzelement vorzugsweise in Form eines Kissens aufweisen, das an einer Freilaufseite des zweiten Eingriffsglieds angeordnet ist. Das federnde Zusatzelement kann eine progressive Federkennlinie aufweisen. Es kann zu der Schenkelfeder parallel oder in Reihe geschaltet sein. Es kann sich bei dem Zusatzelement um ein Metall-, Elastomer- oder Gummiteil handeln.

Um eine Montage, insbesondere beim axialen Aufeinanderschieben der Kupplungsteile zu vereinfachen, kann das Kissen durch einen Kissenhalter vorgespannt sein, wobei sich der Kissenhalter vorzugsweise an dem zweiten Eingriffsglied abstützt und somit das Kissen an der Freilaufseite hält.

Das Kissen kann dabei zusammengedrückt werden, so dass es gemeinsam mit dem zweiten Eingriffsglied in eine Aussparung oder Vertiefung zwischen zwei benachbarten ersten Eingriffsgliedern geschoben werden kann. Beispielsweise ist der Kissenhalter so ausgebildet, dass er die Kissen mehrerer zweiter Eingriffsglieder verbindet und gemeinsam vorspannt.

In einem bevorzugten Ausführungsbeispiel sind das erste Eingriffsglied als Zahn einer radial nach innen gerichteten Innenverzahnung des ersten Kupplungsteils und das zweite Eingriffsglied als Zahn einer radial nach außen gerichteten Außenverzahnung des zweiten Kupplungsteiles ausgebildet. Somit ist die formschlüssige Kupplungsvorrichtung als Keilwellenverbindung ausgebildet, die in axialer Richtung ein Relativbewegung zwischen den Kupplungsteilen zulässt.

Anhand der in der Zeichnung beschriebenen Ausführungsbeispiele wird die Erfindung näher beschrieben. Es zeigen:
- Figur 1: in schematischer Weise eine Drehmoment-Übertragungskette zwischen einem Verbrennungsmotor und einem Getriebe;
- Figur 2: in perspektivischer Ansicht ein Schwungrad mit einem ersten Kupplungsteil;
- Figur 3: in perspektivischer Ansicht ein zweites Kupplungsteil;
- Figur 4: gemeinsam das erste und zweite Kupplungsteil;
- Figur 5: eine weitere Ausführung für das erste und zweite Kupplungsteil; und
- Figur 6: ein Ausführungsbeispiel im Längsschnitt.

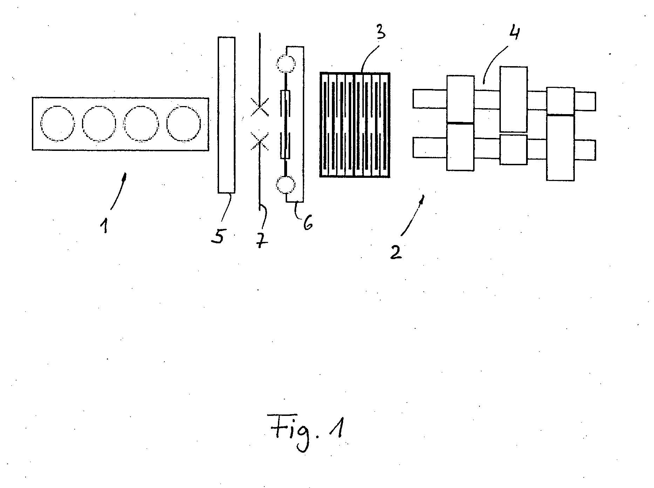

Figur 1 zeigt in schematischer Weise einen Verbrennungsmotor 1 und ein Doppelkupplungsgetriebe 2 eines Kraftfahrzeugs. Das Doppelkupplungsgetriebe 2 besteht aus einer Doppelkupplung 3 und einem Zahnradsatz 4. Ein Schwungrad 5 ist mit einer Kurbelwelle (nicht dargestellt) des Verbrennungsmotors 1 fest verschraubt. Zwischen der Doppelkupplung 3 und dem Schwungrad 5 ist ein Torsionsdämpfer oder Schwingungsdämpfer 6 angeordnet, der über eine formschlüssige Kupplungsvorrichtung 7 drehfest mit dem Schwungrad 5 verbunden ist. Die Kupplungsvorrichtung 7 kann beispielsweise als Keilwellenverbindung oder als Klauenkupplung ausgebildet sein. Sowohl die Keilwellenverbindung als auch die Klauenkupplung erlauben eine Relativbewegung der Kurbelwelle bzw. des Schwungrads 5 bezogen auf den Schwingungsdämpfer 6 oder auf die Doppelkupplung 3, so dass mögliche Axialbewegungen der Kurbelwelle nicht auf das Getriebe 2 übertragen werden.

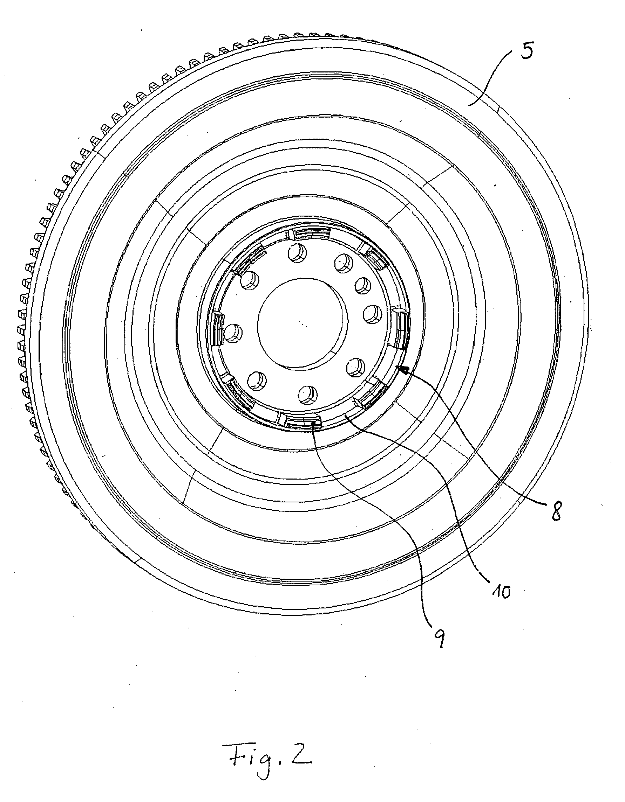

Figur 2 zeigt in perspektivischer Ansicht ein Ausführungsbeispiel für das Schwungrad 5. Das Schwungrad 5 ist drehfest mit einem ersten Kupplungsteil 8 der Kupplungsvorrichtung 7 verbunden. Das erste Kupplungsteil 8 ist im wesentlichen rotationssymmetrisch aufgebaut und weist an seinem Umfang gleich verteilt acht Klauen 9 auf. Die Klauen 9 erstrecken sich dabei in axialer Richtung des Schwungrads 5.

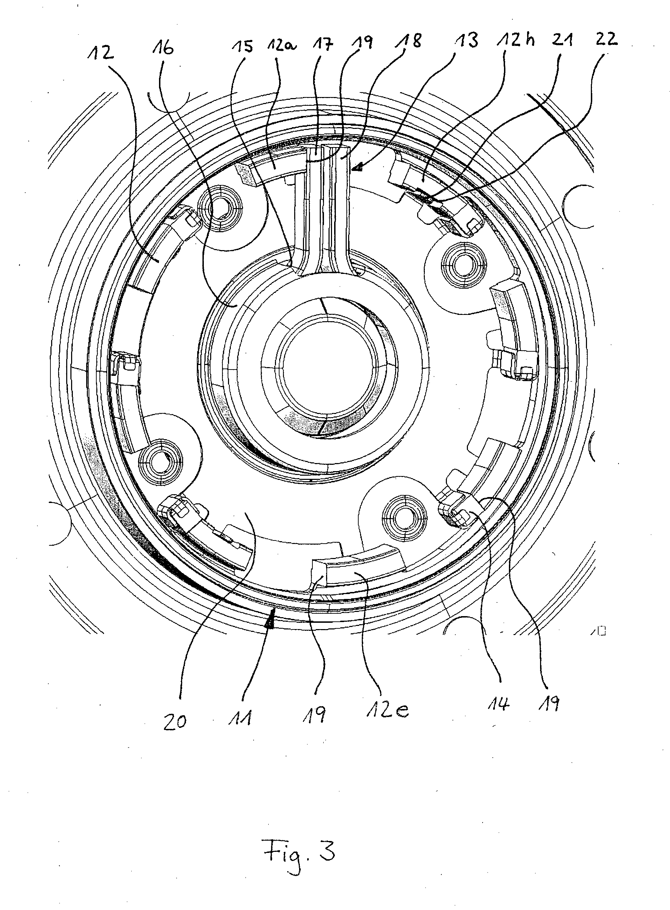

Zwischen zwei benachbarten Klauen 9 ist eine Aussparung oder Vertiefung 10 vorgesehen, in die, wenn die Kupplungsvorrichtung 7 fertig montiert ist, Klauen 12 eines zweiten Kupplungsteils 11 greifen, das in einer Ausführungsform in Figur 3 dargestellt ist. Das zweite Kupplungsteil 11 ist drehfest mit dem Schwingungsdämpfer 6 verbunden. Die Klauen 12 sind ebenfalls gleich verteilt an einem Umfang angeordnet und zu den Klauen 9 des ersten Kupplungsteils im wesentlichen komplementär ausgebildet. Dies bedeutet, dass sich eine Klaue 12 des zweiten Kupplungsteils 11 in einer Aussparung 10 zwischen zwei benachbarten Klauen 9 des ersten Kupplungsteils anordnen lässt. Dies führt zu einer formschlüssigen drehfesten Verbindung zwischen den Kupplungsteilen 8, 11

Des weiteren weist das zweite Kupplungsteil 11 eine Federeinrichtung auf, die eine Schenkelfeder 13 und mehrere federnde Zusatzelemente in Form von elelastisch verformbaren Kissen 14 aufweist.

Die Schenkelfeder 13 umfasst einen Ring 15, der in einem ringförmigen Gehäuse 16 gehalten wird. Des weiteren weist die Schenkelfeder 13 zwei sich in radialer Richtung erstreckende Schenkel 17, 18 auf. Gegen eine Federkraft der Schenkelfeder 13 lassen sich die Schenkel 17, 18 aneinanderdrücken, bis sie letztlich zur Anlage kommen.

Insgesamt umfasst die Federeinrichtung des zweiten Kupplungsteils 11 sechs Kissen 14, die jeweils an einer Freilaufseite 19 der Klauen 12 des zweiten Kupplungsteils 11 angeordnet sind. Zwei Klauen 12a, 12e weisen an ihren jeweiligen Freilaufseiten 19 keine Kissen 14 auf.

Die sechs Kissen 14 sind durch einen gemeinsamen Kissenhalter 20 miteinander verbunden. Der Kissenhalter 20 ist als Stanzteil ausgebildet und dient dazu, die elastisch verformbaren Kissen 14 in Position zu halten bzw. vorzuspannen. Dazu weist der Kissenhalter 20 abgewinkelte Stege 21 auf, die in eine innere Ausnehmung 22 einer Klaue 12 (siehe Klaue 12h) greifen und an einer der seitlichen Enden der Ausnehmung 22 in Umfangsrichtung anliegen.

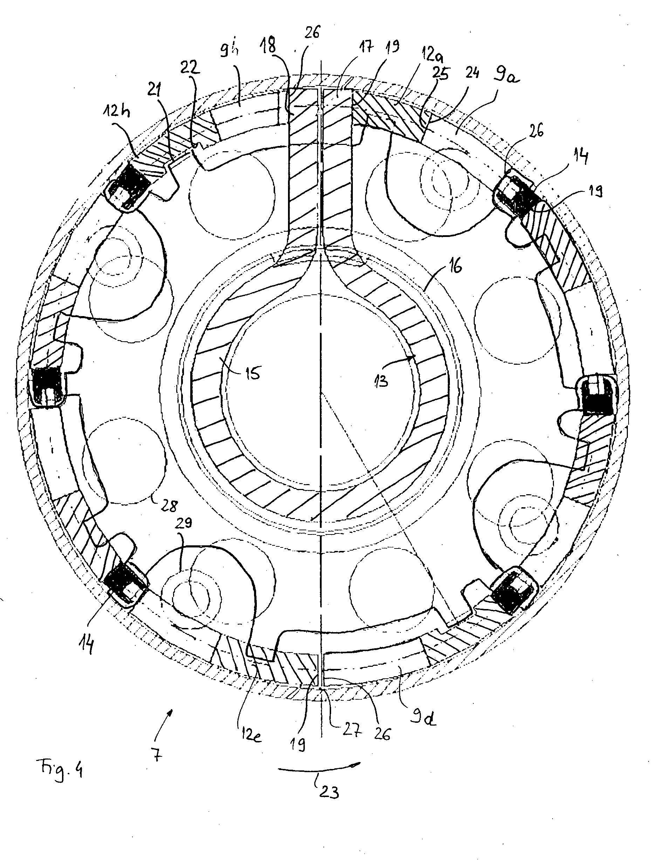

Figur 4 zeigt das Zusammenwirken der Klauen 12 des zweiten Kupplungsteils 11 und der Klauen 9 des ersten Kupplungsteils 8, wobei die Betrachtung von der Seite des Schwingungsdämpfers 6 aus erfolgt. Entsprechend sind aufgrund der nun anderen Perspektive zu der Figur 3, die das zweite Kupplungsteil von der Seite des Verbrennungsmotors 1 bzw. des Schwungrads 5 zeigt, die einzelnen Bauteile in Figur 4 bezogen auf die Darstellung der Figur 3 seitenverkehrt abgebildet. Beispielsweise ist in Figur 4 die Klaue 12a nun rechts von den Schenkeln 17, 18 der Schenkelfeder 13 angeordnet, während sie in Figur 3 links davon zu sehen ist.

Bei normaler Fahrt des Kraftfahrzeugs wird von dem Verbrennungsmotor 1 über die Kupplungsvorrichtung 7 ein Drehmoment auf das Doppelkupplungsgetriebe 2 übertragen. Bezogen auf die Kupplungsvorrichtung 7 bedeutet dies, dass die Klauen 9 des ersten Kupplungsteils das entsprechende Drehmoment auf die Klauen 12 des zweiten Kupplungsteils übertragen. Die Drehrichtung ist dabei durch den Pfeil mit dem Bezugszeichen 23 angedeutet. Entsprechend drücken die Klauen 9 mit einer Lastseite 24 gegen eine direkt anliegende Lastseite 25 der Klauen 12. An der der Lastseite 25 gegenüber liegenden Freilaufseite 19 sind, wie oben bereits ausgeführt, mit Ausnahme der Klauen 12a und 12e, die Kissen 14 angeordnet. An der Freilauffläche 19 der Klaue 12a liegt der Schenkel 17 der Schenkelfeder 13 an. Der andere Schenkel 18 der Schenkelfeder 13 liegt an einer Freilaufseite 26 der Klaue 9h an. Durch die Schenkelfeder 13 wird die Klaue 12a und somit auch die übrigen Klauen 12 gegen die jeweils benachbarten Klauen 9 gedrückt. Damit drückt die Schenkelfeder 13 die Lastseiten 25 der Klauen 12 gegen die entsprechenden Lastseiten 24 der Klauen 9. Für den Drehmomentfluss während der normalen Fahrt bedeutet dies, dass sowohl die Schenkelfeder 13 als auch die Kissen 14 nicht mit dem vom Motor auf das Getriebe übertragene Drehmoment beaufschlagt werden.

Bei einer Lastumkehr, beispielsweise, wenn das Kraftfahrzeug bergab fährt und durch den Motor abgebremst wird, drücken die Klauen 12 mit ihrer Freilaufseite 19 gegen die Freilaufseite 26 der jeweils benachbarten Klaue 9, wobei sowohl die Kissen 14 als auch die Schenkelfeder 13 mit dem dann vom Getriebe 2 auf den Motor 1 übertragenen Drehmoment beaufschlagt werden. Um die Kissen 14 und die Schenkelfeder 13 vor zu hohen Belastungen zu schützen, weist die Kupplungsvorrichtung 7 einen Freilaufstopp oder Freilaufanschlag 27 auf. Bei Lastumkehr, d.h. also bei einer Drehmomentübertrag von dem zweiten Kupplungsteil auf das erste Kupplungsteil, werden die Schenkel 17, 18 der Schenkelfeder 13 sowie die Kissen 14 zusammengedrückt, so dass der in der Figur 4 dargestellte Spalt zwischen der Klaue 12e und der Klaue 9d an dem Freilaufstopp 27 geschlossen wird, so dass dann die Freilaufseite 19 der Klaue 12e an der Freilaufseite 26 der Klaue 9d anliegt. Durch diese Anlage der Klauen 12e, 9d lassen sich die Schenkelfeder 13 und die Kissen 14 vor Überlast schützen.

Um Platz für die Schenkel 17, 18 zu schaffen, sind die Klauen 9h, 12a in Umfangsrichtung gegenüber den anderen Klauen 9, 12 in Umfangsrichtung etwas kürzer ausgeführt. Dies kann in den Klauen 9h, 12a zu größeren Scherspannungen führen, wenn davon ausgegangen wird, dass sich das durch die Kupplungsvorrichtung 7 zu übertragende Drehmoment gleichmäßig auf die acht Klauenpaare verteilt. Um die kürzeren und die damit weniger tragfähigen Klauen 9h, 12a vor Überlast zu schützen, können zwischen Klaue 12a und Klaue 9a und zwischen Klaue 9h und 12h jeweils Spalte vorgesehen sein. Dadurch übertragen die Klauen 9h, 12a nicht mehr das Drehmoment der Kupplung, sondern dienen lediglich dazu, die Federkraft der Schenkelfeder aufzunehmen und die beiden Kupplungsteile in Unfangsrichtung zu verspannen.

Schrauben 28 dienen dazu, das erste Kupplungsteil 8 drehfest an dem Schwungrad 5 zu befestigen. Entsprechende Schrauben zur Befestigung von dem Kupplungsteil 11 an dem Schwingungsdämpfer 6 sind mit dem Bezugszeichen 29 versehen.

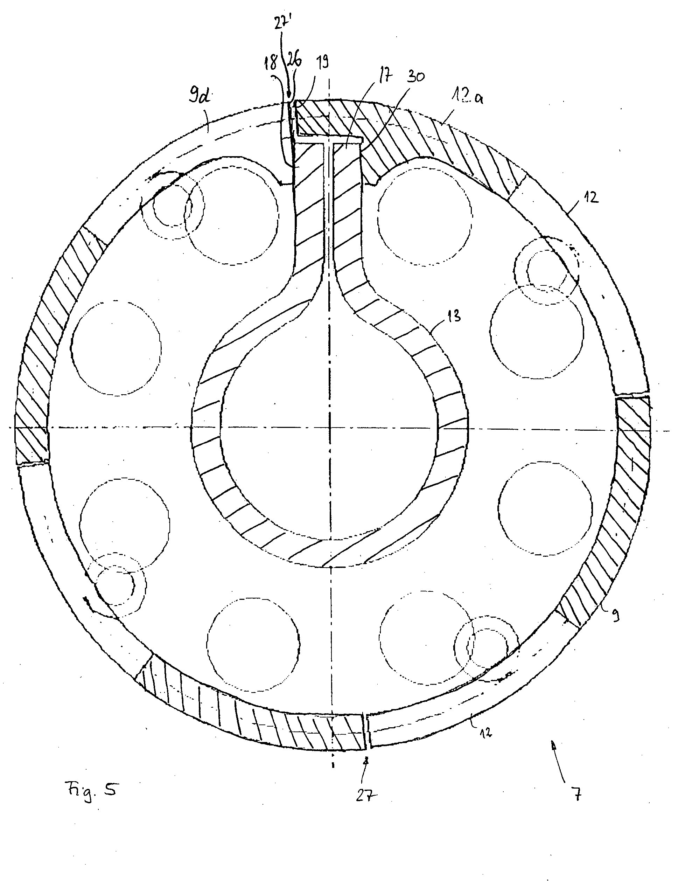

Figur 5 zeigt ein weiteres Ausführungsbeispiel für die Kupplungsvorrichtung 7. Das Ausführungsbeispiel der Figur 7 unterscheidet sich von dem Ausführungsbeispiel der Figur 4 in der Anzahl der Klauen 9, 12. Hier nun weisen die Kupplungsteile 8, 11 jeweils nur vier Klauen 9, 12 auf. Auch sind hier zwischen gegenüberliegenden Freilaufseiten 19, 26 benachbarter Klauen 9, 12 keine Kissen angeordnet. Dies bedeutet, dass die Klauen 9, 12 mit ihren jeweiligen Lastseiten 24, 25 allein durch die Spannkraft der Schenkelfeder 13 aneinander gedrückt werden. Ein weiterer Unterschied zwischen den Ausführungsbeispielen der Figuren 5 und 4 liegt darin, dass der Schenkel 17 nicht an der Freilaufseite 19 der Klaue 9a anliegt, sondern an einer gesonderten Anlagefläche 30. Zwischen der Freilaufseite 26 der Klaue 9d des ersten Kupplungsteils und der Klaue 12a ist ein kleiner Spalt vorgesehen, der sich schließt, wenn bei Lastumkehr, also von einer Drehmomentübertragung vom Getriebe auf den Motor, die beiden Schenkel 17, 18 gegen die Kraft der Schenkelfeder 13 zusammengedrückt werden. Somit weist die Ausführung der Figur 5 einen weiteren Freilaufstopp 27' auf, der in etwa um 180 ° versetzt zu dem in der Figurenbeschreibung von Figur 4 bereits erwähnten Freilaufstopp 27 angeordnet ist. Die Schenkel 17, 18 der Schenkelfeder 13 des Ausführungsbeispiels gemäß Figur 5 erstrecken sich somit nicht bis zu dem äußeren Umfang der Klauen 9, 12, sondern in etwa nur bis zu dem inneren Umfang der Klauen 9, 12. Um eine genügend große Anlagefläche für den Schenkel 18 zu bilden, ist die Freilauffläche der Klaue 9d in radialer Richtung nach innen gezogen.

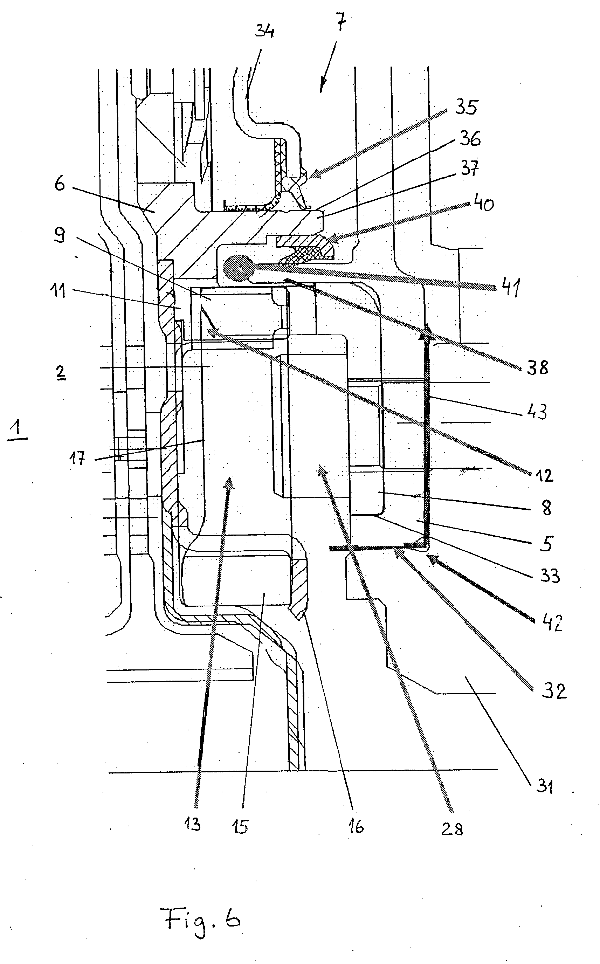

Figur 6 zeigt ein Ausführungsbeispiel für die Kupplungsvorrichtung 7 im Längsschnitt. In der Darstellung der Figur 6 befindet sich auf der rechten Seite der (im wesentlichen nicht dargestellte) Motor 1, der fest mit dem Schwungrad 5 verbunden ist. Eine Kurbelwelle 31 des Motors 1 weist einen Absatz 32 auf, der zur Aufnahme des ersten Schwungrads 5 dient. Durch den Absatz 32 wird ein zentrischer Sitz des Schwungrads 5 auf der Kurbelwelle 31 gewährleistet. Das Schwungrad 5 wiederum bildet mit einem Absatz 33 eine Aufnahme für das erste Kupplungsteil 8, sodass auch dieses koaxial zur Kurbelwelle 31 ausgerichtet ist. Durch die Schraube 28 sind die Kurbelwelle 31, Schwungrad 5 und erstes Kupplungsteil 8 sowohl in axialer als auch in Umfangsrichtung fest miteinander verbunden. Aufgrund der Zweistückigkeit von Schwungrad 5 und dem ersten Kupplungsteil 8 lassen sich diese Bauteile getrennt voneinander fertigen, sodass sich eine Wärmebehandlung zur Härtung gezielt auf das erste Kupplungsteil 8 beschränken lässt.

Auf der linken Seite der Figur 6 schließt sich der Kupplungsvorrichtung 7 das (nicht dargestellte) Doppelkupplungsgetriebe 2 an, an dem der Schwingungs- oder Torsionsdämpfer 6 angeflanscht ist. Dieser nimmt das zweite Kupplungsteil 11 auf, dessen Klauen 12 mit den Klauen 9 des ersten Kupplungsteils 8 in Eingriff stehen. Zu erkennen ist die Schenkelfeder 13, deren Ring 15 in dem ringförmigen Federgehäuse 16 gehalten wird. Von dem Ring 15 erstreckt sich in radialer Richtung nach außen der Schenkel 17.

Zwischen dem Torsionsdämpfer 6 und einem nur ansatzweise dargestellten Dämpfertopf 34 ist eine Dämpferaußendichtung 35 vorgesehen, die auf einer Mantelaußenfläche 36 eines zylindrischen Kragens 37 des Torsionsdämpfers 6 aufliegt. Der zylindrische Kragen 37 umschließt einen zylindrischen, einstückig an dem Schwungrad 5 angeformten Kragen 38, wobei an einer Mantelinnenfläche 39 des Kragen 37 eine Lippendichtung 40 eingespresst ist, die einen Spalte zwischen den ineinander gesteckten Kragen 37, 38 abdichtet.

Durch die Lippendichtung 40 wird eine ringförmige Fettkammer 41 abgedichtet, in der sich die Klauen 9, 11 und die Schenkelfeder 13 befinden. Durch das in der Fettkammer 41 befindliche Fett oder Öl wird ein abrasiver Verschleiß der Klauen 9, 11 minimiert, wodurch sich das akustische Verhalten der Kupplungsvorrichtung auch über sehr lange Lebensdauer nicht verschlechtert.

Durch kleine Bohrungen 42, vorzugsweise zwischen Kurbelwelle 31 und Schwungrad 5 angeordnet, kann Luft aus der Fettkammer 41 entweichen, wenn es dort durch eine Temperaturerhöhung zu einem Überdruck kommt. Ein Luftaustrittspfad 43 ist in Figur 6 mit einem dicken Pfeil dargestellt.

### Bezugszeichenliste

- 1: Verbrennungsmotor
- 2: Doppelkupplunggetriebe
- 3: Doppelkupplung
- 4: Zahnradsatz
- 5: Schwungrad
- 6: Schwingungs-/Torsionsdämpfer
- 7: Kupplungsvorrichtung
- 8: erstes Kupplungsteil
- 9: Klauen
- 10: Aussparung
- 11: zweites Kupplungsteil
- 12: Klaue
- 13: Schenkelfeder
- 14: Kissen
- 15: Ring
- 16: Federgehäuse
- 17: Schenkel
- 18: Schenkel
- 19: Freilaufseite
- 20: Kissenhalter
- 21: Steg
- 22: Ausnehmung
- 23: Drehrichtung
- 24: Lastseite
- 25: Lastseite
- 26: Freilaufseite
- 27: Freilaufstopp
- 28: Schraube
- 29: Schraube
- 30: Anlagefläche
- 31: Kurbelwelle
- 32: Absatz
- 33: Absatz
- 34: Dämpfungstopf
- 35: Dämpferaußendichtung
- 36: Mantelaußenfläche
- 37: Kragen
- 38: Kragen
- 39: Mantelinnenflächen
- 40: Lippendichtung
- 41: Fettkammer
- 42: Bohrung
- 43: Luftaustrittspfad

## Patentansprüche

1. Antriebsstrang eines Kraftfahrzeugs mit einer zwischen dem Motor und einem Getriebe eingesetzten Kupplungsvorrichtung (7), mit einem ersten Kupplungsteil (8) und mit einem zweiten Kupplungsteil (11), das koaxial zum ersten Kupplungsteil (8) angeordnet ist, wobei zur formschlüssigen Übertragung eines Drehmomentes zwischen den Kupplungsteilen (8, 11) das erste Kupplungsteil (8) wenigstens ein erstes Eingriffsglied (9) und das zweite Kupplungsteil (11) wenigstens ein zweites Eingriffsglied (12) aufweisen, wobei die Kupplungsvorrichtung (7) eine Federeinrichtung aufweist, durch die das erste Eingriffsglied (9) und das zweite Eingriffsglied (12) in Umfangsrichtung verspannt sind, **dadurch gekennzeichnet, dass** die Federeinrichtung eine Schenkelfeder (13) mit einem Ringteil und zwei Schenkeln (17, 18) aufweist, und wobei das Ringteil im wesentlichen koaxial zu den Kupplungsteilen (8, 11) angeordnet ist und sich die Schenkel (17, 18) in radialer Richtung nach außen erstrecken.

2. Antriebsstrang nach Anspruch 1, **dadurch gekennzeichnet, dass** das Ringteil einen im Umfangsrichtung nicht geschlossenen Ring (15) mit zwei offenen Enden aufweist, wobei jeweils ein Ende des Ringes (15) mit einem der Schenkel (17, 18) verbunden ist.

3. Antriebsstrang nach Anspruch 2, **dadurch gekennzeichnet, dass** der Ring (15) in einem Winkelbereich größer als 300°, vorzugsweise größer als 320° geschlossen ist und die Schenkel (17, 18) im wesentlichen parallel verlaufen.

4. Antriebsstrang nach einem der Ansprüche 1 bis 3, **dadurch gekennzeichnet, dass** ein Querschnitt der Schenkelfeder (13) rechteckig ist.

5. Antriebsstrang nach einem der Ansprüche 1 bis 4, **dadurch gekennzeichnet, dass** im Normalbetrieb das erste Kupplungsteil (8) in Hauptdrehrichtung ein Drehmoment auf das zweite Kupplungsteil (11) überträgt, wobei die Federeinrichtung das erste Eingriffsglied (9) in Hauptdrehrichtung gegen das zweite Eingriffsglied (12) drückt, so dass das erste Eingriffsglied (9) mit einer Lastseite (24) an einer Lastseite (25) des zweiten Eingriffsglieds (12) anliegt.

6. Antriebsstrang nach Anspruch 5, **dadurch gekennzeichnet, dass** das erste Eingriffsglied (9; 37) und das zweite Eingriffsglied (12) einen Freilauf-Anschlag (27) ausbilden, der den Federweg der Federeinrichtung zu deren Schutz begrenzt.

7. Antriebsstrang nach einem der Ansprüche 1 bis 6, **dadurch gekennzeichnet, dass** die Schenkelfeder (13) in axialer Richtung zu dem ersten oder dem zweiten Kupplungsteil (8, 11) fixiert ist und an einem freien Ende eines Schenkels (17, 18) eine Fase aufweist, die ein axiales Aufeinanderschieben der Kupplungsteile (8, 11) erleichtert.

8. Antriebsstrang nach einem der Ansprüche 1 bis 7, **dadurch gekennzeichnet, dass** das erste Eingriffsgiied (9) und das zweite Eingriffsglied (12) in einer Fett- oder Ölkammer (41) angeordnet sind.

9. Antriebsstrang nach Anspruch 8, **dadurch gekennzeichnet, dass** die Fett- oder Ölkammer (41) eine Luftaustrittsöffnung (42) aufweist.

10. Antriebsstrang nach einem der Ansprüche 1 bis 9, **dadurch gekennzeichnet, dass** mehrere erste Eingriffsglieder und mehrere zweite Eingriffsglieder vorgesehen sind.

11. Antriebsstrang nach Anspruch 10, **dadurch gekennzeichnet, dass** ein Eingriffsglied aus der Gruppe der ersten Eingriffsglieder und/oder ein Eingriffsglied aus der Gruppe der zweiten Eingriffsglieder aus einem DrehmomentÜbertragungspfad zwischen dem ersten und dem zweiten Kupplungsteil herausgenommen sind, an denen unmittelbar die Schenkelfeder (13) anliegt bzw. über die die Schenkelfeder (13) mit den übrigen Eingriffsgliedern zusammenwirkt.

12. Antriebsstrang nach einem der Ansprüche 1 bis 11, **dadurch gekennzeichnet, dass** das erste Eingriffglied und das zweite Eingriffsglied jeweils als Klauen (9, 12) ausgebildet sind.

13. Antriebsstrang nach einem der Ansprüche 1 bis 12, **dadurch gekennzeichnet, dass** die Federeinrichtung ein federndes Zusatzelement beispielsweise in Form eines Kissens (14) aufweist, das an einer Freilaufseite (19) des zweiten Eingriffsglied (12) angeordnet ist.

14. Antriebsstrang nach Anspruch 13, **dadurch gekennzeichnet, dass** das Kissen (14) durch einen Kissenhalter (20) vorgespannt ist, wobei sich der Kissenhalter (20) vorzugsweise an dem zweiten Eingriffsglied (12) abstützt.

15. Antriebsstrang nach einem der Ansprüche 1 bis 14, **dadurch gekennzeichnet, dass** das erste Eingriffsglied als Zahn (37) einer radial nach innen gerichteten Innenverzahnung des ersten Kupplungsteils (8) und das zweite Eingriffsglied als Zahn (38) einer radial nach außen gerichteten Außenverzahnung (31) des zweiten Kupplungsteils (11) ausgebildet sind.

## Claims

1. Drive train of a motor vehicle having a clutch apparatus (7) which is inserted between the engine and a transmission, having a first clutch part (8) and having a second clutch part (11) which is arranged coaxially with respect to the first clutch part (8), the first clutch part (8) having at least one first engagement member (9) and the second clutch part (11) having at least one second engagement member (12) for the positively locking transmission of a torque between the clutch parts (8, 11), the clutch apparatus (7) having a spring device, by way of which the first engagement member (9) and the second engagement member (12) are braced in the circumferential direction, **characterized in that** the spring device has a leg spring (13) with a ring part and two legs (17, 18), and the ring part being arranged substantially coaxially with respect to the clutch parts (8, 11) and the legs (17, 18) extending in the radial direction to the outside.

2. Drive train according to Claim 1, **characterized in that** the ring part has a ring (15) which is not closed in the circumferential direction and has two open ends, in each case one end of the ring (15) being connected to one of the legs (17, 18).

3. Drive train according to Claim 2, **characterized in that** the ring (15) is closed in an angular region which is greater than 300°, preferably greater than 320°, and the legs (17, 18) run substantially in parallel.

4. Drive train according to one of Claims 1 to 3, **characterized in that** a cross section of the leg spring (13) is rectangular.

5. Drive train according to one of Claims 1 to 4, **characterized in that**, in normal operation, the first clutch part (8) transmits a torque to the second clutch part (11) in the main rotational direction, the spring device pressing the first engagement member (9) against the second engagement member (12) in the main rotational direction, with the result that the first engagement member (9) bears with a load side (24) against a load side (25) of the second engagement member (12).

6. Drive train according to Claim 5, **characterized in that** the first engagement member (9; 37) and the second engagement member (12) form a freewheel stop (27) which limits the spring travel of the spring device in order to protect it.

7. Drive train according to one of Claims 1 to 6, **characterized in that** the leg spring (13) is fixed in the axial direction to the first or the second clutch part (8, 11) and has a bevel at a free end of a leg (17, 18), which bevel facilitates axial pushing of the clutch parts (8, 11) onto one another.

8. Drive train according to one of Claims 1 to 7, **characterized in that** the first engagement member (9) and the second engagement member (12) are arranged in a grease or oil chamber (41).

9. Drive train according to Claim 8, **characterized in that** the grease or oil chamber (41) has an air outlet opening (42).

10. Drive train according to one of Claims 1 to 9, **characterized in that** a plurality of first engagement members and a plurality of second engagement members are provided.

11. Drive train according to Claim 10, **characterized in that** one engagement member from the group of the first engagement members and/or one engagement member from the group of the second engagement members are taken out of a torque transmission path between the first and the second clutch part, against which the leg spring (13) bears directly and/or via which the leg spring (13) interacts with the remaining engagement members.

12. Drive train according to one of Claims 1 to 11, **characterized in that** the first engagement member and the second engagement member are configured in each case as claws (9, 12).

13. Drive train according to one of Claims 1 to 12, **characterized in that** the spring device has a sprung additional element, for example in the form of a cushion (14), which is arranged on a freewheel side (19) of the second engagement member (12).

14. Drive train according to Claim 13, **characterized in that** the cushion (14) is prestressed by a cushion holder (20), the cushion holder (20) preferably being supported on the second engagement member (12).

15. Drive train according to one of Claims 1 to 14, **characterized in that** the first engagement member is configured as a tooth (37) of a radially inwardly directed internal toothing system of the first clutch part (8) and the second engagement member is configured as a tooth (38) of a radially outwardly directed external toothing system (31) of the second clutch part (11).

## Revendications

1. Chaîne cinématique d'un véhicule automobile, comprenant un dispositif d'embrayage (7) inséré entre le moteur et une transmission, comprenant une première partie d'embrayage (8) et comprenant une deuxième partie d'embrayage (11) qui est disposée de manière coaxiale à la première partie d'embrayage (8), la première partie d'embrayage (8) comprenant au moins un premier organe d'engagement (9) et la deuxième partie d'embrayage (11) comprenant au moins un deuxième organe d'engagement (12) pour la transmission par engagement par complémentarité de forme d'un couple entre les parties d'embrayage (8, 11), le dispositif d'embrayage (7) comprenant un dispositif de ressort au moyen duquel le premier organe d'engagement (9) et le deuxième organe d'engagement (12) sont serrés dans la direction circonférentielle, **caractérisée en ce que** le dispositif de ressort comprend un ressort à branches (13) pourvu d'une partie annulaire et de deux branches (17, 18), et la partie annulaire étant disposée essentiellement de manière coaxiale aux parties d'embrayage (8, 11) et les branches (17, 18) s'étendant vers l'extérieur dans la direction radiale.

2. Chaîne cinématique selon la revendication 1, **caractérisée en ce que** la partie annulaire comprend un anneau (15) non fermé dans la direction circonférentielle et pourvu de deux extrémités ouvertes, une extrémité respective de l'anneau (15) étant reliée à l'une des branches (17, 18).

3. Chaîne cinématique selon la revendication 2, **caractérisée en ce que** l'anneau (15) est fermé dans une région angulaire supérieure à 300°, de préférence supérieure à 320°, et les branches (17, 18) s'étendent essentiellement parallèlement.

4. Chaîne cinématique selon l'une quelconque des revendications 1 à 3, **caractérisée en ce qu'**une section transversale du ressort à branches (13) est rectangulaire.

5. Chaîne cinématique selon l'une quelconque des revendications 1 à 4, **caractérisée en ce qu'**en fonctionnement normal, la première partie d'embrayage (8) transmet un couple à la deuxième partie d'embrayage (11) dans le sens de rotation principal, le dispositif de ressort pressant le premier organe d'engagement (9) contre le deuxième organe d'engagement (12) dans le sens de rotation principal, de telle sorte que le premier organe d'engagement (9) s'applique par un côté de charge (24) contre un côté de charge (25) du deuxième organe d'engagement (12).

6. Chaîne cinématique selon la revendication 5, **caractérisée en ce que** le premier organe d'engagement (9 ; 37) et le deuxième organe d'engagement (12) forment une butée de roue libre (27) qui limite la course de ressort du dispositif de ressort en vue de sa protection.

7. Chaîne cinématique selon l'une quelconque des revendications 1 à 6, **caractérisée en ce que** le ressort à branches (13) est fixé dans la direction axiale par rapport à la première ou à la deuxième partie d'embrayage (8, 11) et comprend un biseau à une extrémité libre d'une branche (17, 18), lequel biseau facilite une poussée axiale des parties d'embrayage (8, 11) l'une sur l'autre.

8. Chaîne cinématique selon l'une quelconque des revendications 1 à 7, **caractérisée en ce que** le premier organe d'engagement (9) et le deuxième organe d'engagement (12) sont disposés dans une chambre à graisse ou à huile (41).

9. Chaîne cinématique selon la revendication 8, **caractérisée en ce que** la chambre à graisse ou à huile (41) comprend une ouverture de sortie d'air (42).

10. Chaîne cinématique selon l'une quelconque des revendications 1 à 9, **caractérisée en ce que** plusieurs premiers organes d'engagement et plusieurs deuxièmes organes d'engagement sont prévus.

11. Chaîne cinématique selon la revendication 10, **caractérisée en ce qu'**un organe d'engagement du groupe des premiers organes d'engagement et/ou un organe d'engagement du groupe des deuxièmes organes d'engagement sont enlevés d'une voie de transmission de couple entre la première et la deuxième partie d'embrayage, contre lesquels le ressort à branches (13) s'applique directement ou par le biais desquels le ressort à branches (13) coopère avec les organes d'engagement restants.

12. Chaîne cinématique selon l'une quelconque des revendications 1 à 11, **caractérisée en ce que** le premier organe d'engagement et le deuxième organe d'engagement sont réalisés respectivement sous forme de griffes (9, 12).

13. Chaîne cinématique selon l'une quelconque des revendications 1 à 12, **caractérisée en ce que** le dispositif de ressort comprend un élément supplémentaire élastique, par exemple sous forme de coussin (14), qui est disposé sur un côté de roue libre (19) du deuxième organe d'engagement (12).

14. Chaîne cinématique selon la revendication 13, **caractérisée en ce que** le coussin (14) est précontraint par un support de coussin (20), le support de coussin (20) s'appuyant de préférence contre le deuxième organe d'engagement (12).

15. Chaîne cinématique selon l'une quelconque des revendications 1 à 14, **caractérisée en ce que** le premier organe d'engagement est réalisé sous forme de dent (37) d'une denture intérieure, orientée radialement vers l'intérieur, de la première partie d'embrayage (8) et le deuxième organe d'engagement est réalisé sous forme de dent (38) d'une denture extérieure (31), orientée radialement vers l'extérieur, de la deuxième partie d'embrayage (11).
